Europäisches Patentamt

European Patent Office

Office européen des brevets

(11) Publication number: **0 517 415 A1**

# EUROPEAN PATENT APPLICATION

(21) Application number: **92304748.4**

(22) Date of filing: **27.05.92**

(51) Int. Cl.5: **G06F  12/06**

(30) Priority: **07.06.91 US 714404**

(43) Date of publication of application:
**09.12.92 Bulletin  92/50**

(84) Designated Contracting States:
**CH DE FR GB IT LI NL SE**

(71) Applicant: **International Business Machines Corporation**
**Old Orchard Road**
**Armonk, N.Y. 10504(US)**

(72) Inventor: **Lenta, Jorge Eduardo**
**5499 Fox Hollow Drive**
**Boca Raton, FL 33486(US)**
Inventor: **Tashakori, Esmaeil**
**2935 SW 22nd Avenue**
**Delray Beach, FL 33445(US)**

(74) Representative: **Blakemore, Frederick Norman**
**IBM United Kingdom Limited Intellectual**
**Property Department Hursley Park**
**Winchester Hampshire SO21 2JN(GB)**

(54) Personal computer with enhanced memory access and method.

(57)  This invention relates to a personal computer (1) having enhanced memory access performance, attained by distributing memory locations whereby logically consecutive pages of data are placed in memory in different physical banks.

*Fig. 6*

This invention relates to a personal computer having enhanced memory access performance. The invention contemplates that such enhanced performance will be attained by distributing memory locations used in accordance with a particular scheme, in which consecutive pages of data are placed in memory in different physical banks.

Personal computer systems in general and IBM personal computers in particular have attained widespread use for providing computer power to many segments of today's modern society. ('IBM' is a registered trade mark of International Business Machines Corporation). Personal computer systems can usually be defined as a desk top, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a motherboard or system planar to electrically connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55, 65, 70, 80, 90 and 95. ('Personal System/2' is a trade mark of International Business Machines Corporation).

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's MICRO CHANNEL bus architecture exemplified by IBM's PERSONAL SYSTEM/2 Models 50 through 95. ('MICRO CHANNEL' is a trade mark of International Business Machines Corporation). The Family I models typically have used the popular INTEL 8088 or 8086 microprocessor as the system processor. ('INTEL' is a trade mark of Intel Corporation). These processors have the ability to address one megabyte of memory. The Family II models typically use the high speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

Processors in high performance personal computers such as some of those mentioned above are capable of processing data more quickly than data can be accessed from conventional dynamic random access memory (DRAM) using conventional data storage technology. In particular, DRAM is organised in banks and pages, with each bank being made up of a number of pages. For example only, a one megabyte DRAM will conventionally have pages of two kilobytes. Prior to the present invention. DRAM has been used in page mode and with successive pages stored at successive locations in a given bank until that bank is filled and storage must move to another bank. In such a mode, when a page of memory is accessed by a read or write operation, bytes of data stored in the same page can be accessed in the shortest permissible time interval. This is called a "page hit" and requires no wait state cycles in central processor unit (CPU) operation. When data to be accessed is stored in a different page of memory in the same bank, additional time is required to close the first page and open the new one. This is called a "page miss bank hit" and requires two wait state cycles in CPU operation.

When a different page of memory is accessed from a different bank, the time required is more than a page hit and less than a page miss bank hit. This is called a "bank miss" and requires one wait state cycle in CPU operation.

Viewed from one aspect the present invention provides a personal computer system comprising: a high speed data bus; a microprocessor coupled directly to the high speed data bus; volatile memory coupled directly to the high speed data bus and organised in banks and pages for receiving data to be written thereto and for storing therein data to be read therefrom; and a bus interface controller coupled directly to the high speed data bus for providing communications between the high speed data bus and an input/output data bus and for signalling row and column addresses to the volatile memory, the signals determining the physical locations in the banks and rows of data written thereto, stored therein and read therefrom; characterised in that the bus interface controller directs that logically successive pages of data are stored in physically separate banks.

Viewed from another aspect the present invention provides a method of operating a personal computer which has a high speed data bus, a microprocessor coupled directly to the high speed data bus, volatile memory coupled directly to the high speed data bus and organised in banks and pages for receiving data to be written thereto and for storing therein data to be read therefrom, and a bus interface controller coupled directly to the high speed data bus, the method comprising the steps of: signalling row and column addresses to the volatile memory from the bus interface controller for determining the physical location in the banks and rows of data written thereto, stored therein and read therefrom; and directing that logically successive pages of data are stored in physically separate banks.

In accordance with the present invention the number of wait state cycles imposed on CPU operation by memory functions is reduced thereby enhancing data handling performance of a personal computer. DRAM addressing is structured in such a way that consecutive pages of memory are distributed to different banks of DRAM. Occurrences of a requirement of two wait state cycles of the CPU for a page miss bank hit are therefore reduced.

In order that the invention may be fully understood a preferred embodiment thereof will now be described by way of example only, with reference to the accompanying drawings in which:

Figure 1 is a perspective view of a personal computer embodying this invention;

Figure 2 is an exploded perspective view of certain elements of the personal computer shown in Figure 1 including a chassis, a cover, and a planar board and illustrating certain relationships among those elements;

Figure 3 is a schematic view of certain components of the personal computer shown in Figures 1 and 2;

Figure 4 is a schematic representation of DRAM memory included in the personal computer shown in Figures 1 to 3;

Figure 5 is a schematic representation of the distribution of successive pages of memory in accordance with prior art practices; and

Figure 6 is a schematic representation of the distribution of successive pages of memory in accordance with this invention.

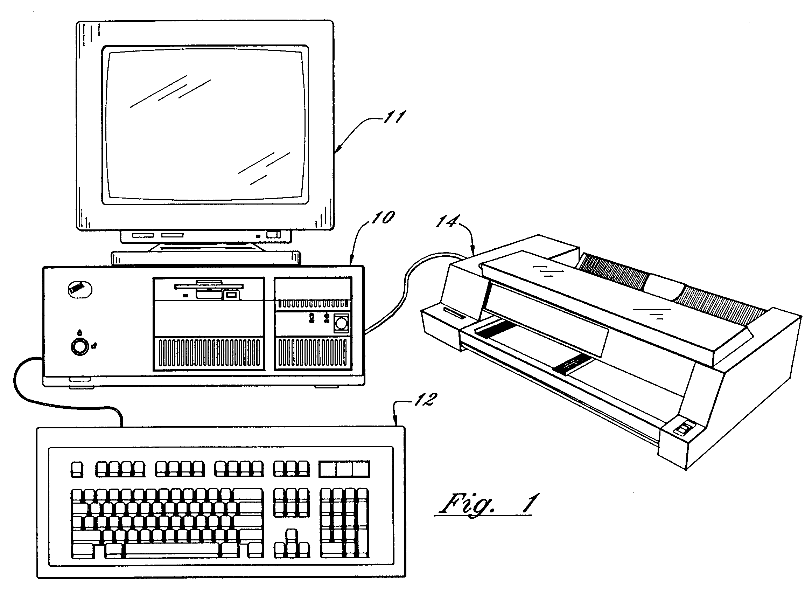

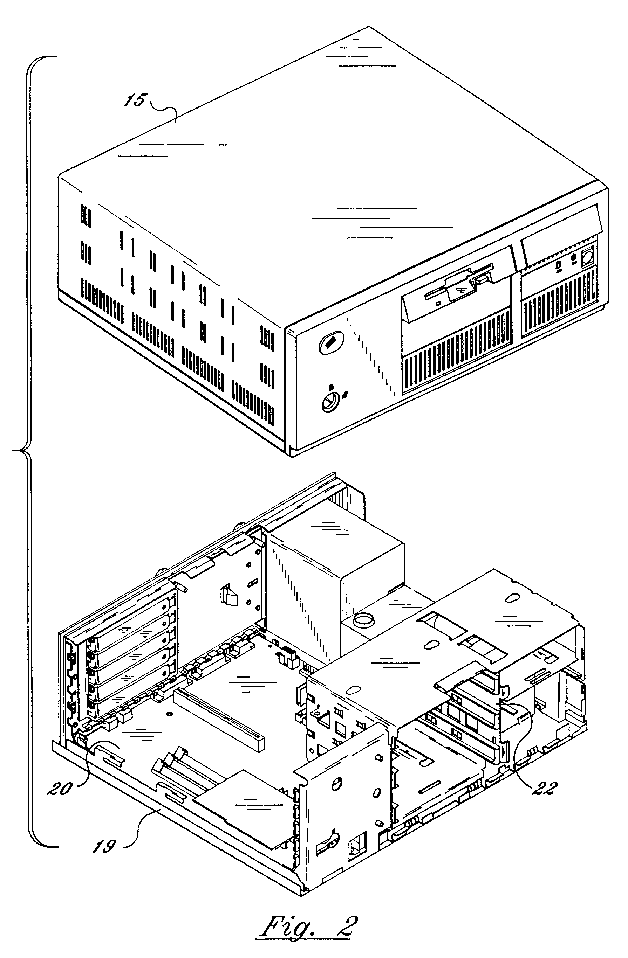

Referring now more particularly to the accompanying drawings, a microcomputer embodying the present invention is there shown and generally indicated at 10 (Figure 1). As mentioned hereinabove, the computer 10 may have an associated monitor 11, keyboard 12 and printer or plotter 14. The computer 10 has a cover 15 which cooperates with a chassis 19 in defining an enclosed, shielded volume for receiving electrically powered data processing and storage components for processing and storing digital data, as shown in Figure 2. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base and a rear panel (Figure 2) and defines at least one open bay for receiving a data storage device such as a disk drive for magnetic or optical disks, a tape backup drive, or the like. In the illustrated form, an upper bay 22 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 22.

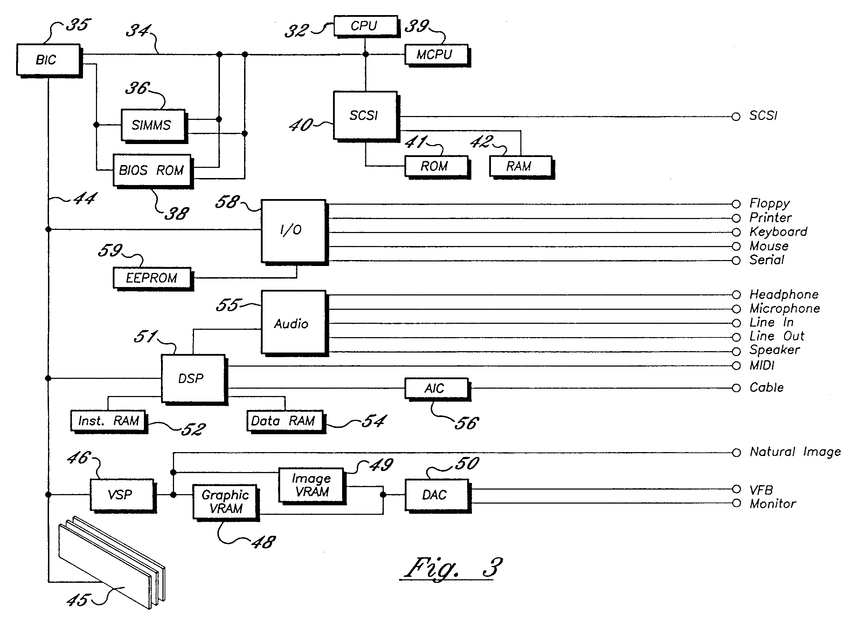

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32. While any appropriate microprocessor can be used as the CPU 32, one suitable microprocessor is the 80386 which is sold by INTEL. The CPU 32 is connected by a high speed CPU local bus 34 to a bus interface control unit 35, to volatile random access memory (RAM) 36 here shown as Single Inline Memory Modules (SIMMs) and to BIOS ROM 38 in which is stored instructions for basic input/output operations to the CPU 32. The BIOS ROM 38 includes the BIOS that is used to interface between the I/O devices and the operating system of the microprocessor 32. Instructions stored in ROM 38 can be copied into RAM 36 to decrease the execution time of BIOS.

While the present invention is described hereinafter with particular reference to the system block diagram of Figure 3, it is to be understood at the outset of the description which follows that it is contemplated that the apparatus and methods in accordance with the present invention may be used with other hardware configurations of the planar board. For example, the system processor could be an Intel 80286 or 80486 microprocessor.

Returning now to Figure 3, the CPU local bus 34 (comprising data, address and control components) also provides for the connection of the microprocessor 32 with a math coprocessor 39 and a Small Computer Systems Interface (SCSI) controller 40. The SCSI controller 40 may, as is known to persons skilled in the arts of computer design and operation, be connected or connectable with Read Only Memory (ROM) 41, RAM 42, and suitable external devices of a variety of types as facilitated by the I/O connection indicated to the right in the Figure. The SCSI controller 40 functions as a storage controller in controlling storage memory devices such as fixed or removable media electromagnetic storage devices (also known as hard and floppy disk drives), electro-optical, tape and other storage devices.

The bus interface controller (BIC) 35 couples the CPU local bus 34 with an I/O bus 44. By means of the bus 44, the BIC 35 is coupled with an optional feature bus such as a MICRO CHANNEL bus having a plurality of I/O slots for receiving MICRO CHANNEL adapter cards 45 which may be further connected to an I/O device or memory (not shown). The I/O bus 44 includes address, data, and control components.

Coupled along the I/O bus 44 are a variety of I/O components such as a video signal processor 46 which is associated with video RAM (VRAM) for storing graphic information (indicated at 48) and for storing image information (indicated at 49). Video signals exchanged with the processor 46 may be passed through a Digital to Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with a input/output controller 58 with associated Electrical Erasable Programmable Read Only Memory (EEPROM) 59 by which inputs and outputs are exchanged with conventional peripherals including floppy disk drives, a printer or plotter 14, keyboard 12, a mouse or pointing device (not shown), and by means of a serial port.

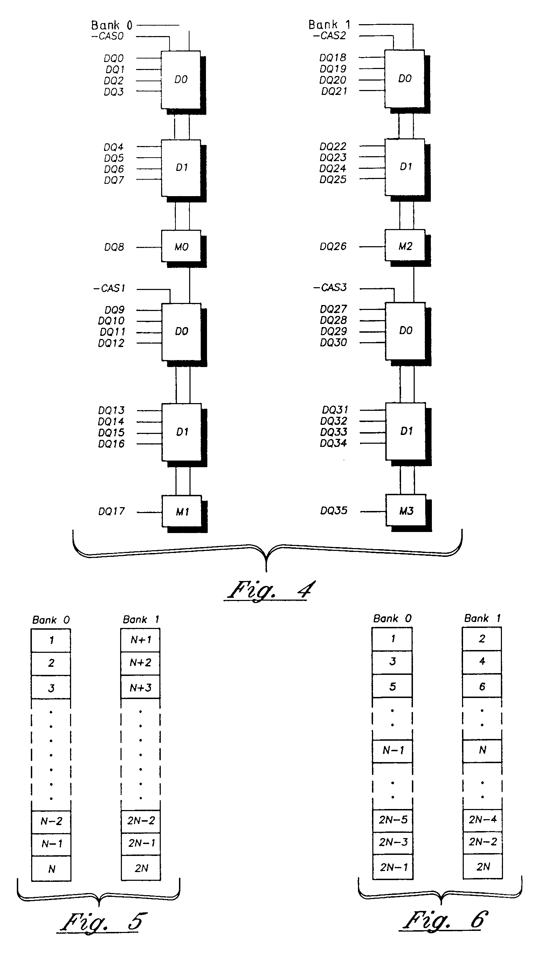

DRAM in the SIMMs 36 is arranged generally as indicated in Figure 4. As shown there, data bytes may be stored in two banks with specific locations accessed for read or write functions by memory address signals selecting rows (row address signals or RAS) and columns (column address signals or CAS). Such arrangement of DRAM is well known to persons appropriately skilled in computer arts and will not be described here in greater detail. The RAS and CAS are generated in a memory controller. In the embodiment illustrated, the memory control function is one function of the bus interface controller 35. Logic within the BIC 35 issues RAS and CAS to the SIMMs 36 and determines the physical locations within memory at which data is stored.

The manner of such physical location organisation prior to the present subject invention has been as shown in Figure 5. As there illustrated, successive logical pages (indicated in numerical sequence as 1, 2, 3, etc.) have been located in successive physical pages until a bank is filled (as bank 0 by page n), and then progressively located in an adjacent bank (as bank 1). This arrangement is here referred to as a non-interleaved mode and leads to the page miss bank hit time requirement mentioned at the beginning of the present specification.

By contrast, the present invention contemplates a manner of physical organisation which is shown in Figure 6. While the Figure 6 illustration and the discussion to follow use a two bank distribution for simplicity, it will be understood that the distribution may extend over whatever number of banks are available. In particular, sequential physical memory pages are placed across multiple memory banks, in order to increase the probability of page miss occurring across different banks. Thus, in Figure 6, successive pages 1, 2, 3, etc. alternate in physical location between banks 0 and 1. Where three or more banks are available, physical locations would be rotated among the banks available. Either of these arrangements is here referred to as interleave mode.

As will be understood, the distribution of physical pages across multiple banks contemplated by this invention compels a substantially higher likelihood of bank miss than of page miss bank hit situations. With this higher likelihood comes a reduced requirement of wait state cycles, thereby enhancing overall data handling performance of the personal computer 10.

**Claims**

1. A personal computer system comprising:

   a high speed data bus;

   a microprocessor coupled directly to the high speed data bus;

   volatile memory coupled directly to the high speed data bus and organised in banks and pages for receiving data to be written thereto and for storing therein data to be read therefrom; and

   a bus interface controller coupled directly to the high speed data bus for providing communications between the high speed data bus and as input/output data bus and for signalling row and column addresses to the volatile memory, the signals determining the physical locations in the bank and rows of data written thereto, stored therein and read therefrom;

characterised in that the bus interface controller directs that logically successive pages of data are stored in physically separate banks.

2. A personal computer as claimed in claim 1 wherein the volatile memory includes two banks each having a plurality of pages and wherein the bus interface controller alternates logically successive pages of data between the two banks.

3. A personal computer as claimed in claim 1 wherein the volatile memory includes at least three banks each having a plurality of pages and wherein the bus interface controller rotates logically successive pages of data sequentially among the banks.

4. A method of operating a personal computer which has a high speed data bus, a microprocessor coupled directly to the high speed data bus, volatile memory coupled directly to the high speed data bus and organised in banks and pages for receiving data to be written thereto and for storing therein data to be read therefrom, and a bus interface controller coupled directly to the high speed data bus, the method comprising the steps of:

signalling row and column addresses to the volatile memory from the bus interface controller for determining the physical location in the banks and rows of data written thereto, stored therein and read therefrom; and

directing that logically successive pages of data are stored in physically separate banks.

5. A method as claimed in claim 4 wherein the directing step comprises alternating logically successive pages of data between two banks.

6. A method as claimed in claim 4 wherein the directing step comprises rotating logically successive pages of data sequentially among at least three banks.

Fig. 1

*Fig. 2*

_Fig. 3_

EP 0 517 415 A1

Bank 0
—CAS0

DQ0
DQ1
DQ2
DQ3

D0

DQ4
DQ5
DQ6
DQ7

D1

DQ8 — M0

—CAS1

DQ9
DQ10
DQ11
DQ12

D0

DQ13
DQ14
DQ15
DQ16

D1

DQ17 — M1

Bank 1
—CAS2

DQ18
DQ19
DQ20
DQ21

D0

DQ22
DQ23
DQ24
DQ25

D1

DQ26 — M2

—CAS3

DQ27
DQ28
DQ29
DQ30

D0

DQ31
DQ32
DQ33
DQ34

D1

DQ35 — M3

_Fig. 4_

| Bank 0 | Bank 1 |
|--------|--------|
| 1 | N+1 |
| 2 | N+2 |
| 3 | N+3 |
| . | . |
| . | . |
| . | . |
| . | . |
| . | . |
| N−2 | 2N−2 |
| N−1 | 2N−1 |
| N | 2N |

_Fig. 5_

| Bank 0 | Bank 1 |
|--------|--------|
| 1 | 2 |
| 3 | 4 |
| 5 | 6 |
| . | . |
| . | . |
| N−1 | N |
| . | . |
| . | . |
| 2N−5 | 2N−4 |
| 2N−3 | 2N−2 |
| 2N−1 | 2N |

_Fig. 6_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 924 375 (FUNG ET AL.) <br> * column 1, line 18 - column 3, line 3; claim 1; figure 4 * | 1-6 | G06F12/06 |
| A | EP-A-0 380 855 (DIGITAL EQUIPMENT CORPORATION) <br> * page 4, line 5 - page 7, line 30; figures 1,2,2A * | 1-6 | |
| A | EP-A-0 427 425 (COMPAQ COMPUTER CORPORATION) <br> * page 2, column 1, line 5 - column 2, line 27; figures 1A-2B * | 1,4 | |
| A | ELECTRICAL DESIGN NEWS <br> vol. 35, no. 7, 29 March 1990, NEWTON,MA,USA <br> pages 166 - 168; <br> NAGI MEKHIEL: 'DRAM control scheme speeds memory access' <br> * the whole document * | 1,4 | |
| | | | **TECHNICAL FIELDS SEARCHED (Int. Cl.5)** <br><br> G06F |

The present search report has been drawn up for all claims

| Place of search | Date of completion of the search | Examiner |
|---|---|---|
| THE HAGUE | 31 JULY 1992 | JONES H.D. |